# FASCICULE DE BREVET EUROPEEN

(11) **EP 3 535 737 B1**
(45) Date de publication et mention de la délivrance du brevet: **17.06.2020**
(21) Numéro de dépôt: 17794029.3
(22) Date de dépôt: 26.10.2017
(51) Int. Cl.: G07G 1/00, G06K 7/10, G06K 7/00

(54) **CHARIOT OU AUTRE CONTENANT COMPORTANT DES MOYENS DE DÉTERMINATION OPTIMISÉE ET EN TEMPS-RÉEL DE SON CONTENU**
WAGEN ODER ANDERE BEHÄLTER MIT MITTELN ZUM OPTIMALEN BESTIMMEN DES INHALTS IN ECHTZEIT
TROLLEY OR OTHER CONTAINER INCLUDING MEANS FOR OPTIMALLY DETERMINING IN REAL-TIME THE CONTENTS THEREOF

(30) Priorité: 03.11.2016 FR 1660625
(43) Date de publication de la demande: 11.09.2019
(73) Titulaire: Université de Lille, 59800 Lille (FR); Centre National de la Recherche Scientifique, 75016 Paris (FR)
(72) Inventeur: KASSI, Rédha, 59658 Villeneuve d'Ascq (FR); LE PALLEC, Xavier, 59650 Villeneuve d'Ascq (FR); MARIAGE, Philippe, 59242 Templeuve (FR)
(74) Mandataire: Novagraaf Technologies
(86) Numéro de dépôt international: PCT/FR2017/052955
(87) Numéro de publication internationale: WO 2018/083399

(56) Documents cités:
- EP-A1- 1 583 050
- WO-A1-2015/051303
- ES-A1- 2 394 319
- US-A1- 2002 170 961

## Description

### DOMAINE DE L'INVENTION

L'invention concerne le domaine de la manutention et du transport et notamment le suivi en temps-réel du contenu d'un chariot, ou tout autre contenant, dans lequel l'on vient ajouter ou retirer des éléments. Elle s'applique notamment au domaine de la grande distribution, mais aussi au transport de marchandises par containers, au domaine médical, etc.

### CONTEXTE DE L'INVENTION

Il est connu en soi de faciliter l'inventaire en temps-réel du contenu d'un contenant tel un chariot par l'utilisation d'une antenne radio associée au contenant et d'étiquettes radio apposées sur les éléments. La technologie RFID (pour « *Radio Frequency Identification* » en langue anglaise) permet un tel mécanisme, que l'on peut trouver décrit, par exemple :
- dans la demande de brevet US 2014/03507,
- dans la demande de brevet ES2394319 A1 qui concerne un système d'achat automatique basé sur des dispositifs munis d'une sécurité active permettant de contrôler l'achat et la détection des produits introduits dans un chariot, ce dernier comprenant au moins une antenne UHF de pilotage, ou encore
- dans la demande de brevet WO 2015051303 A1 qui décrit un système d'achat comprenant: un réceptacle, un capteur de détection d'article couplé au réceptacle et configuré pour détecter la présence physique de l'article lorsque celui-ci est disposé dans ledit réceptacle, et un scanner d'achat configuré entre autres pour lire un symbole d'identification associé à un article et pour recevoir une indication de la présence physique de l'article dans le réceptacle à partir du capteur de détection d'articles.

Ainsi, en déclenchant une lecture des étiquettes RFID présentes dans le chariot, on peut déterminer un inventaire du contenu de ce chariot.

Toutefois, d'une façon générale, les solutions existantes ne sont pas satisfaisantes pour plusieurs raisons.

Tout d'abord, les lectures des étiquettes RFID engendrent une consommation énergétique importante, ce qui pose le problème de l'autonomie énergétique du chariot qui doit alors être rechargé trop souvent.

La réduction du nombre de lectures peut par ailleurs provoquer une diminution importante de l'exactitude de l'inventaire et, donc, une perte de confiance en celui-ci. Il a par exemple été proposé d'effectuer une lecture déclenchée par la détection de l'ouverture du contenant, mais expérimentalement, cette unique lecture ne suffit pas à déterminer l'inventaire du contenant, notamment car les étiquettes de certains éléments peuvent être masquées et illisibles par l'antenne radio. En outre, il n'est pas souhaitable ou possible d'équiper l'ensemble des chariots d'un mécanisme d'ouverture et fermeture.

D'autres solutions proposent des lectures périodiques des étiquettes RFID, mais elles ne précisent pas les instants optimaux pour ces lectures et comment elles permettent une certitude sur l'inventaire ainsi établie. La périodicité est également à déterminer, et est un compromis à rechercher entre la minimisation de la consommation d'énergie et un degré de précision souhaité.

### RESUME DE L'INVENTION

Des solutions ont été apportées à certaines des problématiques mentionnées ci-dessus, mais aucune, à la connaissance de la demanderesse, ne permet de résoudre l'ensemble de ces problématiques dans un même temps et de façon élégante.

En particulier, l'invention vise donc à fournir un procédé permettant de réaliser en temps-réel l'inventaire du contenu d'un chariot, ou de tout autre contenant, en minimisant la consommation énergétique et en maximisant le degré de confiance, ou d'exactitude, de cet inventaire, notamment en évitant les erreurs provoquées par les éléments masqués au sein du contenant.

A cette fin, la présente invention propose un procédé pour déterminer l'ensemble des éléments disposés à l'intérieur d'un contenant disposant d'une ouverture permettant l'ajout ou le retrait d'un ou plusieurs éléments de l'intérieur dudit contenant, et chaque élément étant physiquement solidaire d'une étiquette radio stockant un identificateur, ledit procédé comportant une étape de surveillance continue d'un mouvement à travers ladite ouverture, déclenchant, en cas de détection d'un dit mouvement, la génération d'un signal de détection et entrainant une première, une deuxième et une troisième lectures desdites étiquettes radio, lesdites lectures étant effectuées au moyen d'une antenne radio adaptée pour rayonner dans une zone correspondant sensiblement audit intérieur, ladite première lecture étant déclenchée sur le front montant dudit signal de détection, ladite deuxième lecture étant déclenchée sur le front descendant dudit signal de détection, ladite troisième lecture étant déclenchée après un délai prédéterminé suite au déclenchement de la deuxième lecture, et une mise à jour dudit ensemble à partir des identificateurs lus pendant lesdites première, deuxième et troisième lectures.

Suivant des modes de réalisation préférés, l'invention comprend une ou plusieurs des caractéristiques suivantes qui peuvent être utilisées séparément ou en combinaison partielle entre elles ou en combinaison totale entre elles :
- l'étape de surveillance comporte la transmission d'un ou plusieurs signaux infrarouges entre une ou plusieurs sources et un ou plusieurs capteurs et dans lequel ladite détection de mouvement correspond à la détermination d'une rupture d'au moins un signal infrarouge ;
- à la suite de ladite mise à jour dudit ensemble, une liste d'identificateurs associés audit ensemble est transmise à un dispositif de communication, pour déterminer des informations relatives aux éléments associés auxdits identificateurs de ladite liste et présenter lesdites informations sur une interface homme-machine.

Un autre objet de l'invention est relatif à un programme d'ordinateur comportant des moyens pour mettre en œuvre le procédé précédemment décrit lorsqu'il est déployé sur une plateforme de traitement de l'information.

Un autre objet de l'invention concerne un contenant adapté pour déterminer l'ensemble des éléments disposés à l'intérieur de celui-ci et disposant d'une ouverture permettant l'ajout ou le retrait d'un ou plusieurs éléments de l'intérieur dudit contenant, et chaque élément étant physiquement solidaire d'une étiquette radio stockant un identificateur, ledit contenant comportant
- des moyens de surveillance continue d'un mouvement à travers ladite ouverture, déclenchant, en cas de détection d'un dit mouvement, la génération d'un signal de détection et,
- des moyens de traitement pour, en cas de réception d'un signal de détection, entrainer une première, une deuxième et une troisième lectures desdites étiquettes radio, ladite première lecture est déclenchée sur le front montant dudit signal de détection, ladite deuxième lecture est déclenchée sur le front descendant dudit signal de détection, ladite troisième lecture est déclenchée après un délai prédéterminé suite au déclenchement de la deuxième lecture, lesdites lectures s'effectuant en collaboration avec une antenne radio adaptée pour rayonner dans une zone correspondant sensiblement audit intérieur, et pour mettre à jour ledit ensemble à partir des identificateurs lus pendant lesdites première, deuxième et troisième lectures.

Un autre objet de l'invention concerne un contenant tel que précédemment décrit dans lequel ladite antenne est une antenne à champ proche.

Suivant des modes de réalisation préférés, l'invention comprend une ou plusieurs des caractéristiques suivantes qui peuvent être utilisées séparément ou en combinaison partielle entre elles ou en combinaison totale entre elles :
- ladite antenne est une antenne à champ proche :
- lesdits moyens de traitement sont prévus pour, à la suite de ladite mise à jour, transmettre une liste d'identificateurs associés audit ensemble à un dispositif de communication, pour déterminer des informations relatives aux éléments associés auxdits identificateurs de ladite liste et présenter lesdites informations sur une interface homme-machine.

Enfin, un autre objet de l'invention concerne un dispositif comportant une pluralité de contenants tels que précédemment décrits.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de contenant selon un mode de réalisation de l'invention, et le contexte dans lequel il s'insère.
La figure 2 représente schématiquement un organigramme représentant un mode de réalisation du procédé selon l'invention
La figure 3 représente schématiquement un exemple de signal de détection d'un mouvement reçu par les moyens de traitement, selon un mode de réalisation de l'invention.
La figure 4 représente schématiquement un exemple de contenant selon un mode de réalisation de l'invention comportant un dispositif de communication.

### DESCRIPTION DETAILLEE DE L'INVENTION

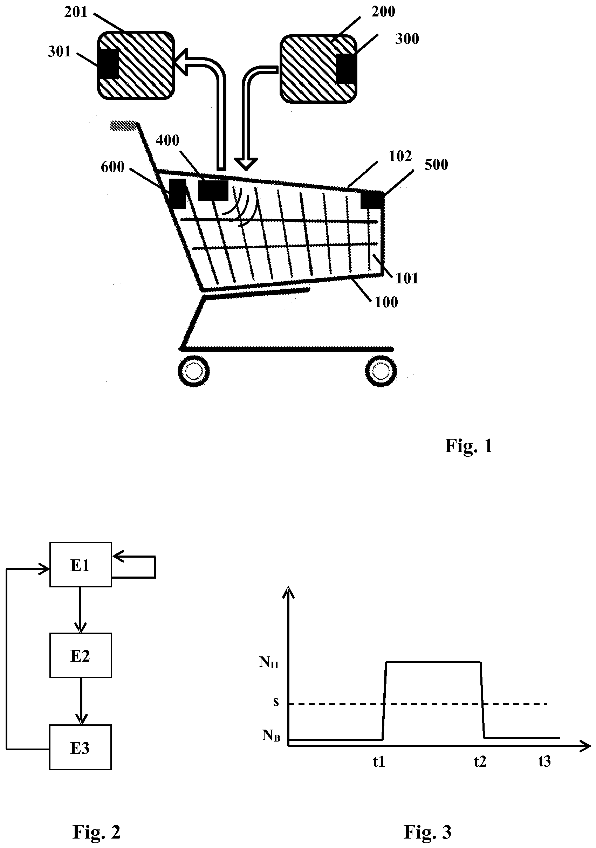

La figure 1 représente un contenant de type chariot tel que ceux utilisés dans un supermarché, mais l'invention s'applique à différents domaines et différents types de contenant.

On appelle contenant 100 tout objet physique disposant d'un intérieur 101 formant une cavité dans lequel peuvent être disposés, ajoutés et retirés des éléments 200, 201, et d'une ouverture 102 faisant interface entre l'intérieur et l'extérieur du contenant. Tout objet ajouté ou retiré franchit nécessairement cette ouverture 102.

L'invention peut trouver des applications en dehors du domaine de la grande consommation. Un exemple est le domaine médical où le personnel hospitalier peut utiliser des chariots afin de se déplacer à travers un hôpital avec un grand nombre de médicaments et autres matériaux médicaux.

Un autre exemple peut être le transport de marchandises, dans lequel les éléments, ou marchandises, trouvent place dans des contenants de type « containers ». Il s'agit alors de pouvoir en temps-réel déterminer de façon aussi précise que possible le contenu d'un container à différents moments de la chaîne de transport.

Il peut également être prévu des dispositifs comportant plusieurs contenants. Ces contenants peuvent être solidaires au sein de ce dispositif et agencés sous la forme de tiroirs. Un tel dispositif est notamment utilisé par le personnel médical pour le transport des médicaments et autres matériaux médicaux (pansements, stéthoscopes, thermomètres, bandages, etc.).

La nature des éléments considérés dépend bien évidement du domaine d'application de l'invention.

Dans le contexte de la grande distribution, il peut s'agir de produits commerciaux qu'un client peut choisir dans un rayon pour le mettre dans son chariot. Dans le contexte médical, il peut s'agir de boîtes de médicament, d'un équipement médical, d'un matériel médical, etc.

Ces différents éléments sont physiquement solidaires d'étiquettes radio qui peuvent par exemple être conformes à la technologie RFID, ou toute autre technologie équivalente permettant une lecture à distance d'un identificateur radio stocké sur une étiquette passive.

L'étiquette peut être directement collée à même l'élément dans certains cas. Dans d'autres cas, d'autres arrangements peuvent être prévus pour rendre l'étiquette physiquement solidaire de l'élément.

Le contenant selon l'invention comporte une antenne radio 400 adaptée pour rayonner dans une zone correspondant sensiblement à l'intérieur 101 du contenant 100. Cette antenne peut être une antenne simple, ou un système de corps rayonnant disposés au sein de l'intérieur 101. Différents arrangements, et différentes technologies peuvent donc être mis en œuvre afin de permettre une correspondance aussi précise que possible entre le volume de l'intérieur 101 du contenant et la zone de rayonnement de l'antenne 400.

Cette correspondance est en effet importante pour une bonne détermination des éléments contenues dans le contenant, ou chariot, 100, ceci afin notamment de se prémunir de deux sources de problèmes :
- éviter que des éléments contenus dans le chariot 100 soient placés dans une zone échappant au rayonnement de l'antenne 400 ;
- éviter que l'antenne 400 ne détecte des éléments situés hors du chariot 100. Cette situation peut survenir si le chariot est positionné à proximité immédiate d'un rayon de supermarché, ou bien lorsque deux chariots sont placés à proximité.

En outre, l'antenne doit être adaptée au matériau utilisé pour le contenant 100. Notamment, si ce dernier est constitué de métal, la structure de l'antenne doit être prévue pour éviter les interférences générées par la présence de ce métal.

Selon un mode de réalisation de l'invention, l'antenne radio 400 est une antenne en champ proche. Elle peut être répartie sur le périmètre de l'ouverture 102 du contenant, à une distance par rapport aux bords marquant l'ouverture du contenant choisie en fonction de la forme du chariot et de la fréquence de l'antenne.

Plus particulièrement, l'antenne peut former une boucle autour de ce périmètre et être parcourue par un courant d'amplitude constante. Afin d'éviter la création perturbatrice d'un champ magnétique inhomogène due au fait que la circonférence de cette boucle est plusieurs fois supérieure à la longueur d'onde de l'antenne, l'antenne peut être basée sur des structures de type CLRH-TL (pour « *Composite Left-Right Hand* - *Transmission Line »*), désignées également sous le nom de méta-matériau. Cette structure peut être montée sur un substrat souple afin de faciliter son intégration sur le pourtour du chariot.

Selon l'invention, le chariot 100 comporte également des moyens de surveillance 500 pour surveiller de façon continue l'ouverture 102 afin d'y détecter un éventuel mouvement.

Le terme « continue » vient ici indiquer que, durant la durée de l'utilisation du chariot, le procédé doit constamment surveiller les mouvements, car le système ne peut avoir aucune connaissance a priori de quand ces mouvements auront lieu. Sur la figure 2, ce terme est illustré par la flèche rebouclant sur la case E1 qui représente cette étape de surveillance continue d'un mouvement à travers l'ouverture 102.

Cette étape E1 vise à déterminer le potentiel franchissement de l'ouverture par un élément dans un sens ou dans l'autre. La surveillance d'un mouvement à cette ouverture permet donc de remplir cet objectif.

Différentes mises en œuvre sont possibles pour déterminer un mouvement à l'ouverture 102. Préférentiellement, une barrière infrarouge est mise en place. Pour ce faire, une ou plusieurs sources infrarouges transmettent des signaux infrarouges à un ou plusieurs capteurs. Ces signaux peuvent être quelconques, notamment des signaux constants. La surveillance du mouvement consiste alors à surveiller la rupture d'un signal infrarouge en déterminant, sur chacun des capteurs, une non-réception du signal. Selon un mode de réalisation, on peut prévoir que cette non-réception doit intervenir pendant une période qui peut être supérieure à un seuil, avant de déclencher une décision de détermination d'un mouvement.

Autrement dit, cette barrière infrarouge fonctionne comme un interrupteur qui, en cas de détection d'un mouvement, génère un signal de détection.

Un exemple d'un tel signal est représenté sur la figure 3. On considère que le signal représenté est à un premier niveau bas, N_{B} lorsque le capteur reçoit le signal infrarouge (ou autre), et qu'il passe à un niveau haut N_{H} lors qu'il ne reçoit pas le signal infrarouge. Par conséquent, le franchissement de l'ouverture par un élément se traduit par la génération d'un signal carré, tel que représenté, dont la largeur correspond au temps de franchissement de l'élément.

En pratique, le chariot, ou contenant, 100 comporte donc des moyens de traitement 600 des signaux directement issus des capteurs infrarouges afin de gérer la barrière, détecter les franchissements, et déclencher des traitements en cas de détection. Ces moyens de traitement 600 peuvent être des moyens programmables tels, par exemple, une carte de type ThinkMagic™, ou Arduino™, etc.

Ces cartes permettent à la fois de gérer des interfaces avec des composants infrarouges, et de mettre en œuvre des procédés décrits sous la forme de programme d'informatique.

Une autre mise en œuvre possible des moyens de détection 500 consiste à utiliser l'antenne radio 400, et à détecter la modification du champ. La modification du champ détectée par l'antenne 400 permet la génération d'un signal de détection qui peut ainsi être traité par les moyens de traitement 600 de la même façon que dans le cas d'une barrière infrarouge.

Comme évoqué précédemment, l'invention peut également s'appliquer à des dispositifs comportant plusieurs contenants, par exemple plusieurs tiroirs. En ce cas, les moyens de détection de mouvement ainsi que les antennes radios peuvent être adaptés pour chaque contenant séparément. Les moyens programmables peuvent être dupliqués pour chaque contenant, ou bien mutualisés pour l'ensemble du dispositif.

En pratique, l'étape E1 de surveillance consiste donc à mesurer le niveau du signal de sortie du ou des capteurs et de considérer, par exemple, la valeur maximale qui, si elle est supérieure à un seuil s prédéterminé, est représentative d'une rupture d'un signal infrarouge et, donc, d'un mouvement à l'ouverture 102 du contenant 100. Ainsi qu'il apparait sur l'exemple illustré par la figure 3, ce seuil s est déterminé dans l'intervalle [N_{B}, N_{H}] de sorte à partitionner l'intervalle en deux classes correspondant à la détection ou à la non-détection d'un mouvement.

Lorsque le signal franchit dans le sens montant, à l'instant t1 le seuil s, on peut immédiatement déterminer un mouvement, et une première lecture des étiquettes radio est déclenchée. A l'instant t1, selon la mise en œuvre schématisée sur la figure 2, le procédé passe donc de l'étape E1 à l'étape E2.

Une seconde lecture est déclenchée sur le front descendant du signal, c'est-à-dire à l'instant t2, et une troisième lecture est déclenchée à un instant t3, après une période prédéterminée débutant à l'instant t2.

Cette période peut correspondre à la durée estimée pour retirer un objet du champ rayonnant de l'antenne 400. Cette valeur peut donc dépendre de l'antenne, de la puissance d'émission du lecteur RFID, mais aussi du comportement moyen des utilisateurs. A titre d'exemple, on peut évoquer une valeur d'environ 3 secondes pour cette durée.

L'instant t2 peut être déterminé par la surveillance du signal et la détection du franchissement du seuil s.

Afin d'éviter des phénomènes d'hystérésis, en cas de perturbation du signal infrarouge, deux seuils distincts pour les fronts montant et descendant peuvent être utilisés, selon des mécanismes bien connus de l'homme du métier.

Selon des études poussées effectuées par la demanderesse, ces 3 lectures aux instants t1, t2, t3 permettent d'obtenir des informations sur les ajouts et retraits d'éléments au sein du contenant, permettant ainsi d'optimiser l'estimation des éléments disposés dans celui-ci à tout moment.

Afin de permettre une corrélation des résultats, les trois lectures doivent être identiques, à l'exception de leur instant de déclenchement t1, t2, t3. Comme évoqué précédemment, ces lectures sont effectuées au moyen de l'antenne radio 400.

Pour chaque lecture, on peut donc déterminer si un identificateur associé à une étiquette radio est vu ou non.

Lorsque la troisième lecture est effectuée, le procédé selon l'invention peut passer dans l'étape E3 de mise à jour de l'ensemble des éléments disposés à l'intérieur du contenant.

En effet, selon l'invention, cet ensemble est déterminé par mise à jour itérative, dont chaque itération est déclenchée par la détermination d'un mouvement.

Ainsi, le processus peut débuter avec un ensemble vide, qui va progressivement s'enrichir au fur et à mesure qu'on vient ajouter des éléments dans le chariot. Mais le processus peut également débuter par l'ajout dans l'ensemble de tous les éléments déjà présents lors du démarrage du procédé. Ce dernier cas représente notamment la situation où le contenant est chargé avant que les moyens de traitement 600 (carte Arduino™...) ne soient démarrés ou initialisés.

Il est possible de disposer d'une mémoire persistante dont le contenu peut survivre à une extinction et rallumage des dispositifs électroniques mettant en œuvre l'invention. Après redémarrage, le processus pourra reprendre dans la mesure où le contenu du chariot n'a pas varié et que le contenu de la mémoire persistante reflète effectivement toujours le contenu du chariot.

D'une façon générale, donc, l'ensemble des éléments disposés dans le contenant est déterminé à partir
- d'une part, des identificateurs lus pendant les première, deuxième et troisième lectures, et
- d'autre part, de ce même ensemble à l'itération précédente.

Une table de vérité peut être définie pour déterminer comment prendre en compte la lecture / non-lecture d'un identificateur lors des 3 lectures.

Une telle table de lecture peut être telle que représentée par le tableau suivant :

| 1^{re} lecture | 2^{e} lecture | 3^{e} lecture | Conclusion | Cas |
|---|---|---|---|---|
| Vu | Vu | Vu | Ajout ou relecture | 1 |
| Vu | Pas vu | Vu | Elément présent mais masqué | 2 |
| Pas vu | Vu | Vu | Elément présent mais masqué | 3 |
| Pas vu | Pas vu | Vu | Elément présent mais masqué | 4 |
| Vu | Vu | Pas vu | Retrait d'un produit | 5 |
| Vu | Pas vu | Pas vu | Elément présent mais masqué | 6 |
| Pas vu | Vu | Pas vu | Retrait d'un élément masqué | 7 |
| Pas vu | Pas vu | Pas vu | Elément présent mais masqué | 8 |

La dernière colonne sert uniquement de référence du cas, pour faciliter les explications ci-dessous, et n'a nullement besoin de faire partie de la structure de données d'une implémentation de cette table de vérité.

Cette table de vérité est appliquée à tous les identificateurs connus, Ces identificateurs connus sont ceux qui ont été vus lors des précédentes itérations, ainsi que ceux nouvellement vus lors de ces trois lectures (cas 1).

Autrement dit, cette étape E3 consiste à mettre à jour l'ensemble déjà connu des identificateurs au moyen de cette table de vérité, en ajoutant et supprimant les identificateurs des éléments qui ont été ajouté ou retiré du contenant (cas 1, 5 et 7).

A l'issue de cette étape, l'ensemble est mis à jour par la maintenance d'une liste d'identificateurs à laquelle les éléments, qui ont été déterminés comme ajoutés ou retirés, sont ajoutés ou supprimés.

Selon un mode de réalisation dégradé de l'invention, il peut suffire de déterminer la liste des éléments à considérer en concaténant une liste précédemment existante, établie lors de l'itération précédente, avec la liste des identificateurs vus par la première lecture. Un tel mode de réalisation ne permet pas d'atteindre l'objectif initial de collecte d'un inventaire (il ne permet_pas de garantir l'exactitude du contenant), mais peut être prévu par exemple pour diagnostic, afin d'obtenir au moins une partie des informations initialement souhaitées.

Cette table de vérité et le fait d'effectuer 3 lectures permettent de se prémunir des erreurs qui auraient été faite en cas d'éléments masqués si moins de 3 lectures avaient été faites. Des éléments masqués auraient été supprimés de l'ensemble des éléments, par erreur, donc (cas 2, 3, 4, 6 et 8) et un retrait d'élément pourrait passer inaperçu (cas 7).

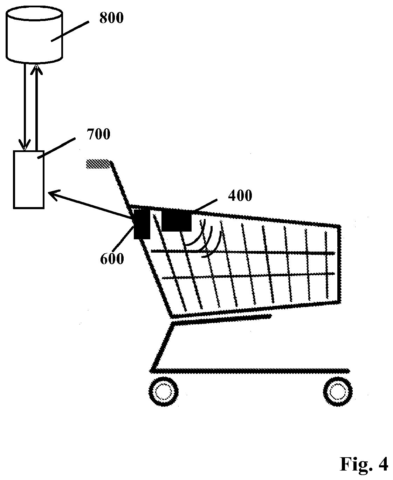

Selon un mode de réalisation de l'invention et tel qu'illustré sur la figure 4, cette liste d'identificateurs est transmise par les moyens de traitement 600 à un dispositif de communication 700 permettant la mise en correspondance entre un identificateur et des informations relatives à l'élément associé à cet identificateur.

La transmission peut être effectuée via toute technologie de communication courte distance, comme par exemple la technologie Bluetooth.

Les informations peuvent être destinées à être présentées sur une interface homme-machine, qui peut être celle du dispositif de communication lui-même. Ce dispositif peut être de type smartphone, tablette numérique etc.

Ces informations peuvent notamment comprendre un libellé de l'élément.

Ainsi dans le contexte d'un chariot permettant de faire des achats dans un supermarché, la liste des produits placés dans le chariot devient accessible en temps-réel sur l'écran d'un terminal de communication. Les informations peuvent également comprendre le prix du produit, etc.

De la même façon, le personnel en charge de la manutention de containers peut ainsi accéder au contenu exact et à jour de chaque container en en visualisant le contenu sur son terminal de communication.

Le dispositif de communication peut également être un pupitre numérique solidaire du contenant.

Le dispositif de communication peut déterminer ces informations relatives aux éléments en collaboration avec une base de données qui peut être déportée sur un serveur distant 800.

Le serveur distant 800 peut alors mettre à jour en temps réel une connaissance de la localisation de chaque élément. Par exemple, dans le cadre d'un supermarché, le serveur est associé au supermarché et a la connaissance de l'inventaire général du supermarché. En fonction des ajouts et retraits dans les différents chariots, il peut déterminer des problèmes de disponibilité de certains produits, avant même le passage en caisse des chariots.

Bien entendu, la présente invention n'est pas limitée aux exemples et au mode de réalisation décrits et représentés, mais elle est susceptible de nombreuses variantes accessibles à l'homme de l'art.

## Revendications

1. Procédé pour déterminer l'ensemble des éléments disposés à l'intérieur (101) d'un contenant (100) disposant d'une ouverture (102) permettant l'ajout ou le retrait d'un ou plusieurs éléments (200, 201) de l'intérieur dudit contenant, et chaque élément étant physiquement solidaire d'une étiquette radio (300, 301) stockant un identificateur, ledit procédé étant **caractérisé en ce qu'**il comporte une étape de surveillance continue d'un mouvement à travers ladite ouverture (102), déclenchant, en cas de détection d'un dit mouvement, la génération d'un signal de détection et entrainant une première, une deuxième et une troisième lectures desdites étiquettes radio, lesdites lectures étant effectuées au moyen d'une antenne radio adaptée pour rayonner dans une zone correspondant sensiblement audit intérieur, ladite première lecture étant déclenchée sur le front montant dudit signal de détection, ladite deuxième lecture étant déclenchée sur le front descendant dudit signal de détection, ladite troisième lecture étant déclenchée après un délai prédéterminé suite au déclenchement de la la deuxième lecture, et une mise à jour dudit ensemble à partir des identificateurs lus pendant lesdites première, deuxième et troisième lectures.

2. Procédé selon la revendication précédente, dans lequel l'étape de surveillance comporte la transmission d'un ou plusieurs signaux infrarouges entre une ou plusieurs sources et un ou plusieurs capteurs et dans lequel ladite détection de mouvement correspond à la détermination d'une rupture d'au moins un signal infrarouge.

3. Procédé selon l'une des revendications précédentes, dans lequel à la suite de ladite mise à jour dudit ensemble, une liste d'identificateurs associés audit ensemble est transmise à un dispositif de communication (700), pour déterminer des informations relatives aux éléments associés auxdits identificateurs de ladite liste et présenter lesdites informations sur une interface homme-machine.

4. Programme d'ordinateur comportant des moyens pour mettre en œuvre le procédé selon l'une des revendications précédentes lorsqu'il est déployé sur une plateforme de traitement de l'information.

5. Contenant (100) adapté pour déterminer l'ensemble des éléments disposés à l'intérieur (101) de celui-ci et disposant d'une ouverture (102) permettant l'ajout ou le retrait d'un ou plusieurs éléments (200, 201) de l'intérieur dudit contenant, et chaque élément étant physiquement solidaire d'une étiquette radio (300, 301) stockant un identificateur, ledit contenant étant **caractérisé en ce qu'**il comporte :
- des moyens de surveillance (500) continue d'un mouvement à travers ladite ouverture (102), déclenchant, en cas de détection d'un dit mouvement, la génération d'un signal de détection et,
- des moyens de traitement (600) pour, en cas de réception d'un signal de détection, entrainer une première, une deuxième et une troisième lectures desdites étiquettes radio, ladite première lecture étant déclenchée sur le front montant dudit signal de détection, ladite deuxième lecture étant déclenchée sur le front descendant dudit signal de détection, ladite troisième lecture étant déclenchée après un délai prédéterminé suite au déclenchement de la deuxième lecture, lesdites lectures s'effectuant en collaboration avec une antenne radio (400) adaptée pour rayonner dans une zone correspondant sensiblement audit intérieur, et pour mettre à jour ledit ensemble à partir des identificateurs lus pendant lesdites première, deuxième et troisième lectures.

6. Contenant selon la revendication précédente dans lequel ladite antenne (400) est une antenne à champ proche.

7. Contenant selon l'une des revendications 5 ou 6, dans lequel lesdits moyens de traitement (600) sont prévus pour, à la suite de ladite mise à jour, transmettre une liste d'identificateurs associés audit ensemble à un dispositif de communication (700), pour déterminer des informations relatives aux éléments associés auxdits identificateurs de ladite liste et présenter lesdites informations sur une interface homme-machine.

8. Dispositif comportant une pluralité de contenants selon l'une des revendications 5 à 7.

## Patentansprüche

1. Verfahren zum Bestimmen der Gesamtheit der im Inneren (101) eines Behälters (100) angeordneten Elemente, der über eine Öffnung (102) verfügt, die das Hinzufügen oder das Entnehmen eines oder mehrerer Elemente (200, 201) des Inneren des Behälters ermöglicht, und jedes Element physikalisch fest mit einem Funketikett (300, 301) verbunden ist, auf dem eine Kennung abgelegt ist, wobei das Verfahren **dadurch gekennzeichnet ist, dass** es einen Schritt zur kontinuierlichen Überwachung einer Bewegung durch die Öffnung (102) hindurch beinhaltet, der, im Falle einer Detektion einer Bewegung die Erzeugung eines Detektionssignals auslöst, und zu einem ersten, einem zweiten, und einem dritten Ablesen der Funketiketten führt, wobei die Ablesungen anhand einer Funkantenne durchgeführt werden, die angepasst ist, um in einer Zone zu strahlen, die im Wesentlichen dem Inneren entspricht, wobei das erste Ablesen bei der ansteigenden Flanke des Detektionssignals ausgelöst wird, das zweite Ablesen bei der absteigenden Flanke des Detektionssignals ausgelöst wird, das dritte Ablesen nach einer vorbestimmten Frist im Anschluss an das Auslösen des zweiten Ablesens, und einer Aktualisierung der Gesamtheit ausgehend von den während des ersten, zweiten und dritten Ablesens abgelesenen Kennungen ausgelöst wird.

2. Verfahren nach dem vorstehenden Anspruch, wobei der Schritt zur Überwachung die Übertragung eines oder mehrerer Infrarotsignale zwischen einer oder mehreren Quellen und einem oder mehreren Sensoren beinhaltet, und wobei die Detektion einer Bewegung der Bestimmung einer Unterbrechung mindestens eines Infrarotsignals entspricht.

3. Verfahren nach einem der vorstehenden Ansprüche, wobei im Anschluss an die Aktualisierung der Gesamtheit eine Liste mit der Gesamtheit zugewiesenen Kennungen zu einer Kommunikationsvorrichtung (700) übertragen wird, um Informationen in Bezug auf die den Kennungen zugewiesenen Elemente der Liste zu bestimmen, und die Informationen auf einer Mensch-Maschinen-Schnittstelle zu präsentieren.

4. Computerprogramm, das Mittel zum Umsetzen des Verfahrens nach einem der vorstehenden Ansprüche beinhaltet, wenn es auf einer Verarbeitungsplattform der Information eingesetzt wird.

5. Behälter (100), der angepasst ist, um die Gesamtheit der im Inneren (101) desselben angeordneten Elemente zu bestimmen, und der über eine Öffnung (102) verfügt, die das Hinzufügen oder das Entnehmen eines oder mehrerer Element (200, 201) des Inneren des Behälters ermöglicht, und jedes Element physikalisch fest mit einem Funketikett (300, 301) verbunden ist, auf dem eine Kennung abgelegt ist, wobei der Behälter **dadurch gekennzeichnet ist, dass** er Folgendes beinhaltet:
- Mittel zur kontinuierlichen Überwachung (500) einer Bewegung durch die Öffnung (102) hindurch, die im Falle einer Detektion einer Bewegung die Erzeugung eines Detektionssignals auslöst, und
- Mittel zur Verarbeitung (600), um im Falle eines Empfangs eines Detektionssignals zu einem ersten, einem zweiten, und einem dritten Ablesen der Funketiketten zu führen, wobei das erste Ablesen bei der ansteigenden Flanke des Detektionssignals ausgelöst wird, das zweite Ablesen bei der absteigenden Flanke des Detektionssignals ausgelöst wird, das dritte Ablesen nach einer vorbestimmten Frist im Anschluss an das Auslösen des zweiten Ablesens ausgelöst wird, wobei die Ablesungen in Zusammenwirkung mit einer Funkantenne (400) durchgeführt werden, die angepasst ist, um in einer Zone zu strahlen, die im Wesentlichen dem Inneren entspricht, und um die Gesamtheit ausgehend von den während des ersten, zweiten und dritten Ablesens abgelesenen Kennungen zu aktualisieren.

6. Behälter nach dem vorstehenden Anspruch, wobei die Antenne (400) eine Nahfeldantenne ist.

7. Behälter nach einem der Ansprüche 5 oder 6, wobei die Mittel zur Verarbeitung (600) vorgesehen sind, um im Anschluss an die Aktualisierung eine Liste mit der Gesamtheit zugewiesenen Kennungen zu einer Kommunikationsvorrichtung (700) zu übertragen, um Informationen in Bezug auf die den Kennungen zugewiesenen Elemente der Liste zu bestimmen, und die Informationen auf einer Mensch-Maschinen-Schnittstelle zu präsentieren.

8. Vorrichtung, die eine Vielzahl von Behältern nach einem der Ansprüche 5 bis 7 beinhaltet.

## Claims

1. Method for determining the set of elements placed in the interior (101) of a container (100) having an aperture (102) allowing one or more elements (200, 201) to be added to or removed from the interior of said container, and each element being physically fastened to a radio tag (300, 301) storing an identifier, said method being **characterised in that** it includes a step of continually monitoring for a movement through said aperture (102), triggering, in case of detection of a movement, the generation of a detection signal that leads to first, second and third readouts of said radio tags, said readouts being carried out by means of a radio antenna suitable for radiating radiation into a zone corresponding substantially to the interior, said first readout being triggered on the rising edge of said detection signal, said second readout being triggered on the falling edge of said detection signal, said third readout being triggered after a preset period of time at the triggering of the second readout, and an updating of said set on the basis of the identifiers read during said first, second and third readouts.

2. Method according to the preceding claim, wherein the step of monitoring includes the transmission of one or more infrared signals between one or more sources and one or more sensors and wherein said detection of movement corresponds to the determining of a rupture of at least one infrared signal.

3. Method according to one of the preceding claims, wherein following said updating of said set, a list of identifiers associated with said set is transmitted to a communication device (700), to determine information relative to the elements associated with said identifiers of said list and present said information on a man-machine interface.

4. Computer program including means for implementing the method according to one of the preceding claims when it is deployed on an information processing platform.

5. Container (100) suitable for determining the set of elements placed in the interior (101) of the latter and having an aperture (102) allowing one or more elements (200, 201) to be added to or removed from the interior of said container, and each element being physically fastened to a radio tag (300, 301) storing an identifier, said container being **characterised in that** it includes:
- means for continually monitoring (500) a movement through said aperture (102), triggering, in case of detection of a movement, the generating of a detection signal and,
- means for processing (600) for, in the event of receiving a detection signal, leading to a first, a second and a third readouts of said radio tags, said first readout being triggered on the rising edge of said detection signal, said second readout being triggered on the falling edge of said detection signal, said third readout being triggered after a preset period of time following the triggering of the second readout, said readouts being carried out in collaboration with a radio antenna (400) suitable for radiating radiation into a zone corresponding substantially to the interior, and for updating said set on the basis of the identifiers read during said first, second and third readouts.

6. Container according to the preceding claim wherein said antenna (400) is a near field antenna.

7. Container according to one of claims 5 or 6, wherein said means of processing (600) are provided to, following said updating, transmit a list of identifies associated with said set to a communication device (700), to determine information relative to the elements associated with said identifiers of said list and present said information on a man-machine interface.

8. Device including a plurality of containers according to one of claims 5 to 7.
